(19) Europäisches Patentamt
European Patent Office
Office européen des brevets

(11) Numéro de publication : **0 110 789**
**B1**

# (12) FASCICULE DE BREVET EUROPÉEN

(45) Date de publication du fascicule du brevet : **11.02.87**

(51) Int. Cl.⁴ : **C 22 B 3/00**, C 22 B 60/02, C 01 F 17/00, C 01 G 56/00

(21) Numéro de dépôt : **83402288.1**

(22) Date de dépôt : **28.11.83**

## (54) Procédé de récupération des actinides et/ou des lanthanides présents à l'état trivalent dans une solution aqueuse acide.

(30) Priorité : **01.12.82 FR 8220129**

(43) Date de publication de la demande : **13.06.84 Bulletin 84/24**

(45) Mention de la délivrance du brevet : **11.02.87 Bulletin 87/07**

(84) Etats contractants désignés : **BE DE GB**

(56) Documents cités :
**CHEMICAL ABSTRACTS, vol. 91, no. 20, 12 novembre 1979, page 398, no. 163698b, Columbus, Ohio, US, C. POHLANDT et al.: "Extraction of metal ions from chloride solution with N,N-dioctylacetamide"**
**CHEMICAL ABSTRACTS, vol. 94, 1981, page 419, no. 21894a, Columbus, Ohio, US, G.M. GASPARINI et al.: "Application of N,N-dialkyl aliphatic amides in the separation of some actinides"**
**CHEMICAL ABSTRACTS, vol. 72, 1970, page 385, no. 36404k, Columbus, Ohio, US, V.S. SHMIDT et al.: "Extraction of various actinide elements from nitric acid solutions by N,N-dialkylacetamides"**
**HYDROMETALLURGY, vol. 8, no. 4, juillet 1982, pages 379-388, Elsevier Scientific Publishing Company, Amsterdam, NL., ZHOU TAILI et al.: "The amide type extractant A101 and its application to the separation of niobium and tantalum, and molybdenum and rhenium"**

(73) Titulaire : **COMMISSARIAT A L'ENERGIE ATOMIQUE Etablissement de Caractère Scientifique Technique et Industriel**
**31/33, rue de la Fédération**
**F-75015 Paris (FR)**

(72) Inventeur : **Hubert, Hervé**
**14, rue Luzel**
**F-53100 Rennes (FR)**
Inventeur : **Musikas, Claude**
**3-5, Avenue Moissan**
**F-91440 Bures sur Yvette (FR)**

(74) Mandataire : **Mongrédien, André et al**
**c/o BREVATOME 25, rue de Ponthieu**
**F-75008 Paris (FR)**

**EP 0 110 789 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue St-Denis, 75001 Paris, France

**Description**

La présente invention a pour objet un procédé de récupération des actinides et/ou des lanthanides présents à l'état trivalent dans une solution aqueuse acide, notamment dans une solution nitrique.

Dans les installations de retraitement de combustibles nucléaires irradiés, on obtient habituellement, au premier stade d'extraction de l'uranium et du plutonium, des solutions aqueuses de produits de fission contenant des quantités relativement importantes d'ions trivalents de la série des lanthanides et des actinides. Les effluents provenant de ces installations contiennent également ces mêmes ions.

Compte tenu de la période relativement longue des éléments actinides trivalents, il est d'un grand intérêt de séparer ceux-ci des solutions aqueuses nitriques afin d'éviter la manipulation de déchets ou d'effluents ayant une activité α élevée. Jusqu'à présent, cette séparation était réalisée par extraction par solvant en utilisant comme extractants des composés organo-phosphorés neutres ou acides. Cependant, l'emploi de tels extractants s'est révélé peu intéressant, car leur rendement d'extraction vis-à-vis des ions trivalents est faible et leur utilisation industrielle pose de nombreux problèmes en raison de la nécessité de travailler à un pH supérieur à 2 et d'utiliser des quantités importantes d'agents salifiants, ce qui augmente le volume des déchets et le coût de traitement.

On a également envisagé d'utiliser pour cette séparation d'autres composés organo-phosphorés neutres ou bidentés tels que des diphosphonates et des carbamoylphosphonates, ainsi que des amides, comme cela est décrit dans J. inorg. Nucl. Chem. 25(1963) p. 883-892, J. Inorg. Nucl. Chem. 26(1964) p. 1991-2003, et Separation Science and Technology 15(4) p. 825-844 (1980).

Cependant, les résultats obtenus ne sont pas satisfaisants, notamment avec les diamides tels que le tétrabutyl malonamide, car les rendements d'extraction sont très faibles.

Néanmoins, on a effectué des recherches sur d'autres diamides car l'utilisation des amides pour l'extraction présente certains avantages. En effet, les procédés de préparation des amides sont généralement simples et peu coûteux et leur stabilité chimique et radiolytique est généralement bonne. De plus, les produits de dégradation des amides (amines et acides carboxyliques) ne perturbent pas le cycle d'extraction et sont faciles à éliminer. Enfin, la dégradation thermique des diamides ne pose pas de problèmes majeurs, contrairement à ce qui se produit avec les extractants organo-phosphorés.

La présente invention a précisément pour objet un procédé de récupération des lanthanides et/ou des actinides présents à l'état trivalent dans une solution aqueuse, par extraction au moyen de nouveaux diamides permettant l'obtention de bons rendements d'extraction.

Le procédé, selon l'invention, de récupération des actinides et/ou des lanthanides présents à l'état trivalent dans une solution aqueuse acide, se caractérise en ce qu'il consiste à mettre en contact ladite solution aqueuse avec une phase organique comprenant un agent d'extraction constitué par un diamide de formule :

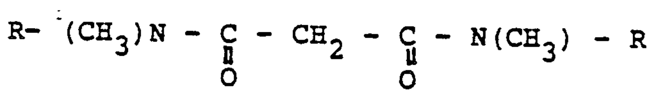 (I)

dans laquelle R est un radical alkyle ayant de deux à dix atomes de carbone.

De tels diamides peuvent être obtenus par réaction du chlorure de l'acide malonique sur l'amine secondaire correspondante, en présence de triéthylamine, selon le schéma réactionnel suivant :

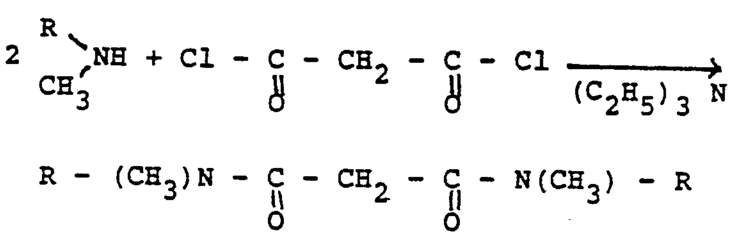


Dans ces conditions, le produit obtenu est constitué par un mélange des trois isomères ayant respectivement les formules suivantes :

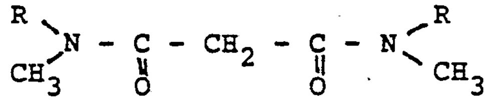 (II)

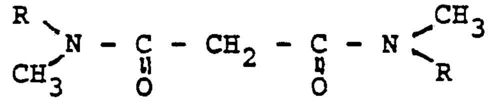 (III)

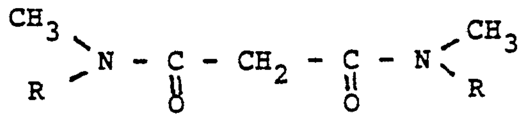

(IV)

Selon l'invention, on peut utiliser comme agent d'extraction l'un de ces isomères ou un mélange de ceux-ci, et la formule (I) donnée ci-dessus représente l'un des isomères ou le mélange de deux ou trois de ceux-ci.

Les amines secondaires utilisées comme produit de départ pour la synthèse des diamides de l'invention peuvent être préparées par réaction du bromure approprié sur la méthylamine, selon le schéma réactionnel suivant :

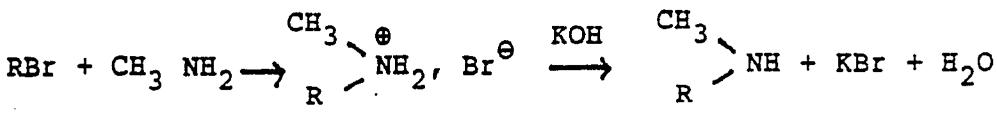


Pour la mise en œuvre du procédé de l'invention, on utilise de préférence des diamides dans lesquels R représente un radical alkyle ayant plus de 4 atomes de carbone et, de préférence, un radical alkyle ayant de 4 à 8 atomes de carbone, par exemple le radical butyle ou le radical octyle.

Les meilleurs résultats sont observés lorsque le nombre d'atomes de carbone du radical alkyle est plus élevé, parce que la solubilité de l'extractant est alors plus grande dans la phase organique.

Selon l'invention, la phase organique comprend généralement un diluant et la concentration en diamide de la phase organique est, de préférence, de 0,1 à 1,5 $mol \cdot l^{-1}$.

En effet, le taux d'extraction augmente généralement avec la concentration en diamide de la phase organique. Toutefois, pour maintenir la viscosité et la densité de la phase organique dans une gamme appropriée, on limite généralement la teneur en diamide de cette phase dans la gamme de 0,5 à 1,5 $mol \cdot l^{-1}$.

Les diluants susceptibles d'être utilisés sont des diluants organiques inertes ayant de préférence une constante diélectrique peu élevée. A titre d'exemple de tels diluants, on peut citer le benzène, le xylène, le mésitylène, le tertiobutylbenzène, le décanol, le dodécane et des mélanges de ceux-ci.

Généralement, on utilise comme diluant du tertiobutylbenzène, éventuellement mélangé à du dodécane, la concentration en dodécane variant de 0 à 60 % en volume. En effet, bien que le dodécane présente la constante diélectrique la plus faible, il est généralement nécessaire de l'utiliser en mélange avec d'autres diluants, car la solubilité des diamides de l'invention est limitée dans le dodécane.

Pour la mise en œuvre du procédé de l'invention, il est préférable de prétraiter la phase organique en la mettant en contact avec une solution aqueuse acide contenant le même acide à la même concentration que la solution aqueuse à traiter contenant les actinides et/ou les lanthanides.

Généralement, la solution aqueuse acide à traiter est une solution nitrique et, dans ce cas, on met en contact la phase organique avec une solution aqueuse ayant la même concentration en acide nitrique. Lorsque la solution aqueuse acide à traiter est une solution perchlorique, on réalise cette opération de prétraitement de la phase organique, par mise en contact avec une solution perchlorique ayant la même concentration en acide perchlorique. Ce prétraitement permet de neutraliser ou de saturer la phase organique afin de ne pas changer les concentrations de la solution à traiter.

Lorsque le procédé de l'invention s'applique au traitement de solutions nitriques, il est préférable que la concentration en acide nitrique de la solution soit de $10^{-1}$ à 5 $mol \cdot l^{-1}$.

Selon l'invention, on peut aussi améliorer les taux d'extraction des lanthanides et des actinides en ajoutant à la solution aqueuse acide, avant de la mettre en contact avec la phase organique, un excès d'anions correspondant à l'acide qu'elle contient, par exemple des ions nitrates lorsque la solution est une solution nitrique ou des ions perchlorates lorsque la solution est une solution d'acide perchlorique.

On précise que le procédé de l'invention peut être mis en œuvre dans tout appareil classique d'extraction tel que des batteries de mélangeurs-décanteurs, des colonnes pulsées, des extracteurs centrifuges, etc... Généralement, on opère à la pression et à la température ambiantes, avec des rapports en volume phase aqueuse/phase organique qui peuvent varier de 0,2 à 5.

Les actinides (III) et les lanthanides (III) extraits dans la phase organique peuvent ensuite être récupérés avec de très bons rendements par réextraction dans de l'eau.

D'autres caractéristiques et avantages de l'invention apparaîtront mieux à la lecture des exemples suivants, donnés bien entendu à titre illustratif et non limitatif en référence aux dessins annexés sur lesquels :

la figure 1 est un diagramme représentant les variations des coefficients de distribution $D_{Am}$ de l'américium et $D_{Eu}$ de l'europium en fonction de la concentration en acide nitrique de la solution aqueuse à traiter,

la figure 2 est un diagramme représentant les variations des coefficients de distribution $D_{Am}$ de l'américium et $D_{Eu}$ de l'europium en fonction de la concentration en diamide de la phase organique, et

la figure 3 est un diagramme représentant les variations des coefficients de distribution $D_{Am}$ et $D_{Eu}$ de l'américium et de l'europium en fonction de la concentration en dodécane du diluant utilisé pour former la phase organique.

Exemple 1 : Préparation du N,N'-diméthyl-N,N'-dioctylmalonamide.

a) Préparation de la N-méthyl-N-octylamine

On prépare la N-méthyl-N-octylamine de la façon suivante :

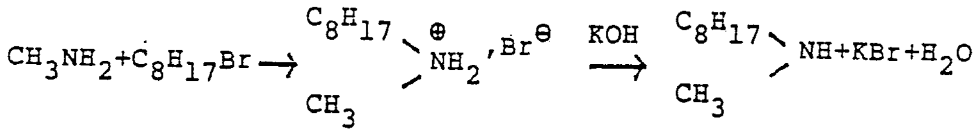


Dans un autoclave de 1 litre, on introduit 405 g d'une solution de méthylamine à 37 % dans de l'éthanol et 150 g de bromure de n-octyle. On porte l'autoclave à 180 °C pendant 20 h, puis à 200 °C pendant 8 h. Après refroidissement, on évapore à sec le résidu brut. On obtient ainsi un résidu cristallin gris que l'on traite avec 300 ml d'une solution de potasse à 20 %. On extrait la phase aqueuse à l'éther, on sèche la phase éthérée sur du sulfate de magnésium, on filtre et on chasse l'éther. On récupère alors le produit recherché par distillation avec un bon rendement (environ 70 %). Le point d'ébullition est de 75 à 78 °C, sous 13 mmHg.

b) Préparation du diamide

On fait réagir ensuite le produit obtenu, c'est-à-dire la N-méthyl-N-octylamine avec le chlorure de malonyle, pour obtenir le diamide correspondant selon le schéma réactionnel suivant :

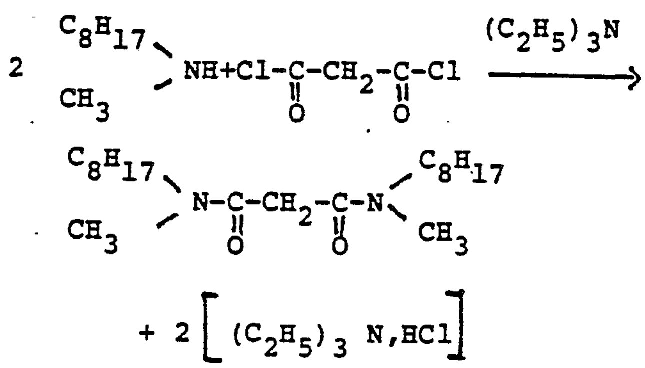


On introduit dans un réacteur contenant 300 ml de chlorure de méthylène, 1 mole de N-méthyl-N-octylamine et 1 mole de triéthylamine. On refroidit le réacteur à une température de 10 °C à l'aide d'un bain de glace. On ajoute alors goutte-à-goutte une solution de 0,5 mole de chlorure de malonyle dans 150 ml de chlorure de méthylène. Après l'addition, on laisse revenir le milieu réactionnel à la température ambiante en maintenant l'agitation pendant 2 h. On lave alors le produit obtenu plusieurs fois à l'eau, puis avec une solution de carbonate de sodium à 10 % et enfin avec de l'eau. On sèche, puis on chasse le solvant, et on récupère le produit par recristallisations successives dans l'hexane. On obtient ainsi le diamide dont le point de fusion est 41 °C. Ce produit a été identifié par résonance magnétique nucléaire du proton dans $CDCl_3$ + TMS ; les résultats sont donnés dans le tableau 1 ci-joint. La pureté a été déterminée par dosage potentiométrique : 99,5 %.

Exemple 2 : Préparation de la N,N-diméthyl-N,N'-dibutylmalonamide.

On prépare cet amide en faisant réagir la N-méthyl-N-butylamine commerciale sur du chlorure de malonyle selon le schéma réactionnel suivant :

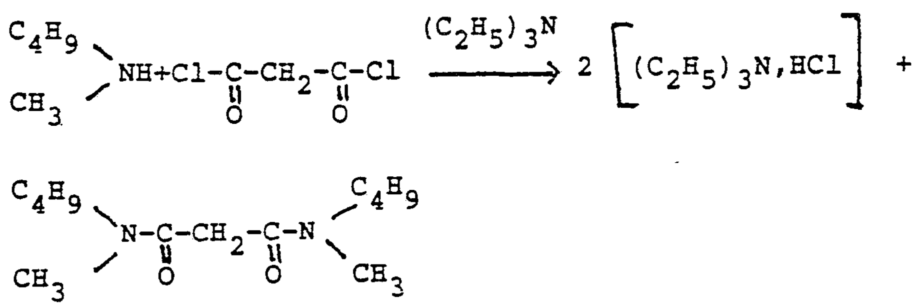

Dans ce but, on dissout 1 mole de N-méthyl-N-butylamine et 1 mole de triéthylamine dans 300 ml de chlorure de méthylène. On refroidit à 10 °C, puis on ajoute progressivement au milieu réactionnel 0,5 mole de chlorure de malonyle dans 150 ml de chlorure de méthylène. On réalise l'addition lentement car la réaction est fortement exothermique. Après cette addition, on laisse le milieu réactionnel revenir à la température ambiante et on l'agite pendant deux heures. On lave ensuite plusieurs fois à l'eau pour éliminer le chlorhydrate, puis une fois avec une solution de carbonate de sodium à 10 % pour éliminer l'acide résiduel et une nouvelle fois à l'eau. On sèche, puis on chasse le solvant, le produit recherché distille à 140-144 °C sous 0,3 mmHg, avec un rendement de 45 %.

On recristallise ensuite le produit dans de l'hexane et on obtient ainsi des cristaux blancs ayant un point de fusion de 52 °C. On caractérise ce produit par dosage potentiométrique et par résonance magnétique nucléaire du proton dans $CDCl_3$ en prenant pour référence le TMS. Les résultats obtenus en RMN sont donnés dans le tableau 2 ci-joint et le dosage potentiométrique donne une pureté de 99 %.

Exemple 3

Cet exemple concerne la récupération de l'américium et de l'europium présents respectivement à des concentrations de $10^{-6}$ mol · $l^{-1}$ pour Am (III) et de $2,5 \cdot 10^{-2}$ mol · $l^{-1}$ pour Eu (III) dans des solutions aqueuses nitriques d'acidité différente.

On utilise dans tous les cas une phase organique constituée par du Diam-8 (c'est-à-dire le diamide de formule (I) dans laquelle R représente le radical octyle) dissous dans du tertiobutyl benzène (Solgyl (R)), la concentration en Diam-8 de la phase organique étant de 0,5 mol · $l^{-1}$ ou de 1 mol · $l^{-1}$. Dans cet exemple, on soumet la phase organique à un prétraitement qui consiste à la mettre en contact avec une solution aqueuse nitrique ayant une concentration en $HNO_3$ identique à celle de la solution contenant l'américium et l'europium, en utilisant pour cette mise en contact un rapport en volume phase aqueuse/phase organique égal à 5. Après deux minutes d'agitation, puis après séparation des phases, on réalise l'extraction en mettant en contact la phase organique prééquilibrée et la phase aqueuse contenant l'américium et l'europium (rapport phase organique/phase aqueuse = 1). On mesure les concentrations en américium ou en europium de la phase aqueuse et de la phase organique et on détermine les coefficients de distribution de l'américium et de l'europium qui correspondent au rapport de la concentration de l'élément (Am ou Eu) dans la phase organique sur la concentration de ce même élément dans la phase aqueuse.

Les résultats obtenus sont donnés sur la figure 1 où les courbes I pour Am et Eu se rapportent aux opérations effectuées avec une concentration de la phase organique en Diam-8 de 0,5 mol · $l^{-1}$ et une concentration de la phase aqueuse en nitrate d'europium de $1 \cdot 10^{-2}$ mol · $l^{-1}$, et les courbes II pour Am et pour Eu se rapportent aux opérations effectuées avec une phase organique comprenant 1 mol · $l^{-1}$ de Diam-8 et une phase aqueuse contenant $2 \cdot 10^{-2}$ mol · $l^{-1}$ de nitrate d'europium. Au vu de ces courbes, on constate que dans tous les cas, les coefficients de distribution de l'américium et de l'europium augmentent avec la concentration en acide nitrique de la phase aqueuse et qu'ils présentent un maximum pour une concentration en acide nitrique de 3 mol · $l^{-1}$.

Aussi, selon l'invention, pour obtenir une bonne extraction des actinides et des lanthanides à l'état trivalent, il est préférable que la phase aqueuse les contenant ait une concentration en acide nitrique de 1 à 5 mol · $l^{-1}$.

Exemple 4

Cet exemple se rapporte également à la récupération de l'américium et l'europium présents tous deux à l'état trivalent dans une phase aqueuse nitrique ayant une concentration en $HNO_3$ de 1 mol · $l^{-1}$, une concentration en Am(III) de $10^{-6}$ mol · $l^{-1}$ et une concentration en Eu(III) de $2,5 \cdot 10^{-2}$ mol · $l^{-1}$.

On utilise pour l'extraction une phase organique constituée par du Diam-8 dilué dans du tertiobutylbenzène. Dans cet exemple, on étudie l'influence de la concentration en Diam-8 de la phase organique et on réalise l'extraction dans les mêmes conditions que celles de l'exemple 3 après avoir prééquilibré la phase organique par une solution nitrique. Les résultats obtenus sont donnés sur la figure 2 qui représente les variations des coefficients de distribution $D_{Am}$ et $D_{Eu}$ en fonction de la concentration de Diam-8 de la phase organique. Sur cette figure, les courbes III pour Am et pour Eu se rapportent aux essais réalisés avec une phase aqueuse qui contenait initialement 1 mol · $l^{-1}$ de $HNO_3$, mais dont la concentration en nitrate a ensuite été ajustée à 4 mol · $l^{-1}$ par adjonction de nitrate de sodium, et les courbes IV pour Am et pour Eu se rapportent aux essais réalisés avec une phase aqueuse dont la concentration en acide nitrique était de 1 mol · $l^{-1}$.

Au vu de ces courbes, on constate que les coefficients de distribution $D_{Am}$ et $D_{Eu}$ augmentent avec la concentration en Diam-8 de la phase organique et que de meilleurs résultats sont obtenus avec la solution aqueuse dont la concentration en nitrate a été ajustée à 4 mol · $l^{-1}$.

Exemple 5

Cet exemple concerne la récupération d'américium (III) ou d'europium (III) à partir d'une solution

aqueuse ayant une concentration en $H^+$ de 1 mol · $l^{-1}$ et une concentration en $NO_3^-$ de 4,1 mol · $l^{-1}$ obtenue par adjonction de nitrate de sodium à une solution aqueuse 1 N d'acide nitrique. On utilise des phases organiques comprenant chacune 0,5 mol · $l^{-1}$ de Diam-8 dans différents diluants et on réalise l'extraction dans les mêmes conditions que celles de l'exemple 3, après avoir prétraité la phase organique comme dans l'exemple 3 en la mettant en contact avec une solution aqueuse acide.

On détermine les coefficients de distribution de l'américium ou de l'europium, comme dans l'exemple 3 après 2 min. d'extraction. Les résultats obtenus sont donnés dans le tableau 3 ci-joint.

Au vu de ce tableau, on constate que des meilleurs résultats sont obtenus lorsqu'on utilise comme diluant un mélange de dodécane et de xylène ou un mélange de dodécane et de décanol 1.

Sur la figure 3, on a représenté les résultats obtenus lorsqu'on utilise comme diluant un mélange de dodécane et de solgyl dont la teneur en dodécane varie de 0 à 60 % en volume.

Au vu de cette figure, on constate que les coefficients de distribution de l'américium et de l'europium augmentent avec la teneur en dodécane du mélange diluant.

Ainsi, la présence du dodécane dont la constante diélectrique est la plus faible permet d'améliorer les résultats obtenus. Cependant, on ne peut utiliser uniquement du dodécane car la solubilité du Diam-8 dans le dodécane est limitée en présence de nitrate.

## Exemple 6

Dans cet exemple, on récupère les lanthanides ou les actinides présents dans une solution d'acide nitrique 3 N contenant $5 \cdot 10^{-2}$ mol · $l^{-1}$ d'ions lanthanides trivalents ou $10^{-3}$ mol · $l^{-1}$ d'ions actinides trivalents.

On utilise une phase organique constituée par du tertiobutylbenzène (Solgyl) contenant 1 mol · $l^{-1}$ de N,N'-diméthyl-N,N'-dioctylmalonamide (Diam-8) et on réalise l'extraction à la pression et à la température ambiantes, dans une batterie de mélangeurs-décanteurs comportant dix étages en utilisant un rapport en volume phase organique/phase aqueuse de 1. Dans ces conditions, on récupère dans la phase organique 99,98 % des actinides et 99,6 % des lanthanides. A la sortie de la batterie de mélangeurs-décanteurs, l'acidité de la phase organique est d'environ 0,7 N.

On réalise ensuite la réextraction des actinides et des lanthanides dans de l'eau en utilisant une batterie de mélangeurs-décanteurs comportant neuf étages avec un rapport en volume phase organique/phase aqueuse de 1. Dans ces conditions, on récupère en phase aqueuse 99,9 % des actinides et des lanthanides extraits dans la phase organique.

## Exemple 7

On récupère les actinides et les lanthanides présents dans une solution d'acide nitrique 3 N, contenant $5 \cdot 10^{-2}$ mol · $l^{-1}$ d'ions lanthanides trivalents et $10^{-3}$ mol · $l^{-1}$ d'ions actinides trivalents. On utilise comme phase organique un mélange de 55 % de dodécane et de 45 % de solgyl en volume, contenant 1 mol · $l^{-1}$ de N,N'-diméthyl-N,N'-dioctylmalonamide (Diam-8). On réalise l'extraction dans une batterie de mélangeurs-décanteurs comportant dix étages avec un rapport en volume phase organique/phase aqueuse égal à 0,5. Dans ces conditions, les coefficients de distribution $D_{Am}$ et $D_{Eu}$ ont respectivement les valeurs de 3,83 et 2,7, et l'on obtient, à la sortie de l'installation, une phase organique ayant une acidité de 0,8 N et contenant 99,9 % des actinides et 98 % des lanthanides.

On réalise la réextraction dans une batterie de mélangeurs-décanteurs comportant dix étages en utilisant de l'eau et en réalisant la mise en contact avec un rapport en volume phase aqueuse/phase organique égal à 1. On récupère ainsi dans la phase aqueuse 99,9 % des actinides et des lanthanides présents dans la phase organique.

## Exemple 8

Dans cet exemple, on utilise le N,N'-diméthyl-N,N'-dibutylmalonamide de l'exemple 2 dilué dans du benzène à une concentration de 0,5 mol · $l^{-1}$ pour extraire l'américium à partir d'une solution nitrique ayant une concentration en $HNO_3$ de 2 mol · $l^{-1}$ et une concentration en américium de $10^{-6}$ mol · $l^{-1}$.

On réalise l'extraction dans les mêmes conditions que celles de l'exemple 3 et on détermine le coefficient de distribution de l'américium.

Si l'on réalise dans les mêmes conditions l'extraction de l'américium en utilisant une phase organique contenant du N,N'-tétrabutylmalonamide au lieu du diamide de l'invention, on obtient un coefficient de partage de l'américium trois fois inférieur, ce qui démontre la supériorité du diamide de l'invention par rapport au diamide utilisé dans l'art antérieur bien que ce dernier comporte des chaînes ayant plus d'atomes de carbone, ce qui devrait le favoriser.

Bien que les exemples illustrent uniquement la récupération de l'américium et de l'europium, le procédé de l'invention s'applique à tous les actinides (III) et les lanthanides (III). On a d'ailleurs obtenu des résultats similaires pour l'extraction du gadolinium et du cérium à l'état trivalent.

Tableau I

| Groupement | δ(ppm) | Intensité | multiplicité |
|---|---|---|---|
| $CH_2\ \underline{CH_3}$ | 0,88 | 6 | multiplet |
| $\underline{CH_2}$ | 1,30 | 24 | multiplet |
| cis 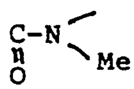 | 2,90 | 3 | singulet |
| trans 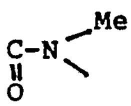 | 3,02 | 3 | doublet |
| 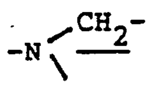 | 3,34 | 4 | multiplet |
| 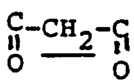 | 3,45 | 2 | singulet |

Tableau II

| Groupement | δ(ppm) | Intensité | multiplicité |
|---|---|---|---|
| $CH_2\ \underline{CH_3}$ | 0,92 | 6 | multiplet |
| $\underline{CH_2}\ CH_3$ | 1,34 | 4 | multiplet |
| $CH_2\ \underline{CH_2}\ CH_2$ | 1,55 | 4 | multiplet |
| cis 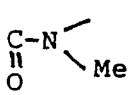 | 2,93 | 3 | doublet |
| trans 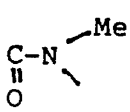 | 3,05 | 3 | doublet |
| $N-CH_2$ | 3,37 | 4 | multiplet |
| 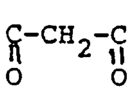 | 3,48 | 2 | singulet |

Tableau III

| Diluant | $D_{Am}$ | $D_{Eu}$ |
|---|---|---|
| Benzène | 0,75 | 0,60 |
| xylène | 1,05 | 0,80 |
| mésitylène | 1,10 | 0,80 |
| solgyl (tertiobutylbenzène) | 1,60 | 1,15 |
| dodécane + décanol 1 (80% et 20% respt. en volume) | 2,70 | 2,05 |
| dodécane + xylène (80% et 20% respt. en volume) | 7,50 | 5,80 |

**Revendications**

1. Procédé de récupération des actinides et/ou des lanthanides présents à l'état trivalent dans une solution aqueuse acide, caractérisé en ce qu'il consiste à mettre en contact ladite solution aqueuse avec une phase organique comprenant un agent d'extraction constitué par un diamide de formule :

$$R-(CH_3)N-\underset{\underset{O}{\|}}{C}-CH_2-\underset{\underset{O}{\|}}{C}-N(CH_3)-R \qquad (I)$$

dans laquelle R est un radical alkyle ayant de 2 à 10 atomes de carbone.

2. Procédé selon la revendication 1, caractérisé en ce que R est un radical alkyle ayant de 4 à 8 atomes de carbone.

3. Procédé selon la revendication 2, caractérisé en ce que R est le radical butyle.

4. Procédé selon la revendication 2, caractérisé en ce que R est le radical octyle.

5. Procédé selon l'une quelconque des revendications 1 à 4, caractérisé en ce que la concentration en diamide de la phase organique est de 0,1 à 1,5 $mol \cdot l^{-1}$.

6. Procédé selon l'une quelconque des revendications 1 à 5, caractérisé en ce que la phase organique comprend un diluant choisi dans le groupe comprenant le benzène, le xylène, le mésitylène, le tertiobutylbenzène, le décanol, le dodécane et des mélanges de ceux-ci.

7. Procédé selon la revendication 6, caractérisé en ce que le diluant est un mélange de tertiobutylbenzène et de dodécane dont la concentration en dodécane varie de 0 à 60 % en volume.

8. Procédé selon l'une quelconque des revendications 1 à 7, caractérisé en ce que la solution aqueuse acide est une solution nitrique ou une solution perchlorique.

9. Procédé selon la revendication 8, caractérisé en ce que la solution aqueuse est une solution nitrique ayant une concentration en acide nitrique de $10^{-1}$ à 5 $mol \cdot l^{-1}$.

10. Procédé selon l'une quelconque des revendications 1 à 9, caractérisé en ce que la solution aqueuse acide étant une solution nitrique, on ajoute des ions nitrates à ladite solution avant de la mettre en contact avec la phase organique.

11. Procédé selon l'une quelconque des revendications 1 à 10, caractérisé en ce que l'on soumet la phase organique à un prétraitement qui consiste à la mettre en contact avec une solution aqueuse contenant le même acide à la même concentration que la solution aqueuse à traiter contenant les actinides et/ou les lanthanides, et en ce que l'on met ensuite en contact la phase organique ainsi prétraitée avec la solution aqueuse à traiter contenant les actinides et/ou les lanthanides.

**Claims**

1. Process for recovery of actinides and/or lanthanides present in the trivalent state in an acidic aqueous solution, characterized in that it consists in bringing the said aqueous solution into contact with an organic phase comprising an extraction agent consisting of a diamide of formula :

$$R-(CH_3)N-\underset{\underset{O}{\parallel}}{C}-CH_2-\underset{\underset{O}{\parallel}}{C}-N(CH_3)-R \qquad (I)$$

in which R is an alkyl radical having from 2 to 10 carbon atoms.

2. Process according to Claim 1, characterized in that R is an alkyl radical having from 4 to 8 carbon atoms.

3. Process according to Claim 2, characterized in that R is a butyl radical.

4. Process according to Claim 2, characterized in that R is an octyl radical.

5. Process according to any one of Claims 1 to 4, characterized in that the concentration of diamide in the organic phase is from 0.1 to 1.5 mol $l^{-1}$.

6. Process according to any one of Claims 1 to 5, characterized in that the organic phase contains a diluent chosen from the group comprising benzene, xylene, mesitylene, tert-butylbenzene, decanol, dodecane and mixtures of these.

7. Process according to Claim 6, characterized in that the diluent is a mixture of tert-butylbenzene and dodecane in which the concentration of dodecane varies from 0 to 60 % by volume.

8. Process according to any one of Claims 1 to 7, characterized in that the acidic aqueous solution is a nitric acid solution or a perchloric acid solution.

9. Process according to Claim 8, characterized in that the aqueous solution is a nitric acid solution having a concentration of nitric acid from $10^{-1}$ to 5 mol $l^{-1}$.

10. Process according to any one of Claims 1 to 9, characterized in that, when the acidic aqueous solution is a nitric acid solution, nitrate ions are added to the said solution before it is brought into contact with the organic phase.

11. Process according to any one of Claims 1 to 10, characterized in that the organic phase is subjected to a pretreatment which consists in bringing it into contact with an aqueous solution containing the same acid, at the same concentration, as the aqueous solution to be treated containing actinides and/or lanthanides, and in that the organic phase, pretreated in this manner, is then brought into contact with the aqueous solution to be treated containing actinides and/or lanthanides.

**Patentansprüche**

1. Verfahren zur Wiedergewinnung von Actiniden und/oder Lanthaniden, die in dreiwertigem Zustand in einer wäßrigen Säurelösung vorliegen, dadurch gekennzeichnet, daß man die wäßrige Lösung mit einer organischen Phase, enthaltend ein Extraktionsmittel, dargestellt durch ein Diamid der Formel

$$R-(CH_3)N-\underset{\underset{O}{\parallel}}{C}-CH_2-\underset{\underset{O}{\parallel}}{C}-N(CH_3)-R \qquad (I)$$

worin R ein Alkylrest mit 2 bis 10 Kohlenstoffatomen bedeutet, in Kontakt bringt.

2. Verfahren nach Anspruch 1, dadurch gekennzeichnet, daß R ein Alkylrest mit 4 bis 8 Kohlenstoffatomen ist.

3. Verfahren nach Anspruch 2, dadurch gekennzeichnet, daß R ein Butylrest ist.

4. Verfahren nach Anspruch 2, dadurch gekennzeichnet, daß R ein Octylrest ist.

5. Verfahren nach einem der Ansprüche 1 bis 4, dadurch gekennzeichnet, daß die Konzentration des Diamids der organischen Phase 0,1 bis 1,5 Mol × $l^{-1}$ beträgt.

6. Verfahren nach einem der Ansprüche 1 bis 5, dadurch gekennzeichnet, daß die organische Phase ein Verdünnungsmittel, gewählt aus der Gruppe, bestehend aus Benzol, Xylol, Mesitylen, tert.-Butylbenzol, Decanol, Dodecan und Mischungen daraus, umfaßt.

7. Verfahren nach Anspruch 6, dadurch gekennzeichnet, daß das Verdünnungsmittel eine Mischung aus tert.-Butylbenzol und Dodecan, worin die Konzentration an Dodecan 0 bis 60 Vol.-% beträgt, ist.

8. Verfahren nach einem der Ansprüche 1 bis 7, dadurch gekennzeichnet, daß die wäßrige Säurelösung eine Salpetersäurelösung oder eine Perchlorsäurelösung ist.

9. Verfahren nach Anspruch 8, dadurch gekennzeichnet, daß die wäßrige Lösung eine Salpetersäurelösung mit einer Konzentration an Salpetersäure von $10^{-1}$ bis 5 Mol × $l^{-1}$ ist.

10. Verfahren nach einem der Ansprüche 1 bis 9, dadurch gekennzeichnet, daß die wäßrige Säurelösung eine Salpetersäurelösung ist und daß man die Nitrationen zu der Lösung vor dem Inkontaktbringen mit der organischen Phase zufügt.

11. Verfahren nach einem der Ansprüche 1 bis 10, dadurch gekennzeichnet, daß man die organische Phase einer Vorbehandlung aussetzt, die darin besteht, daß man sie mit einer wäßrigen Lösung, die die gleiche Säure in der gleichen Konzentration wie die zu behandelnde wäßrige Lösung, enthaltend die Actiniden und/oder die Lanthaniden, enthält, in Kontakt bringt und daß man dann die so vorbehandelte organische Phase mit der zu behandelnden wäßrigen Lösung, die die Actiniden und/oder die Lanthaniden enthält, in Kontakt bringt.

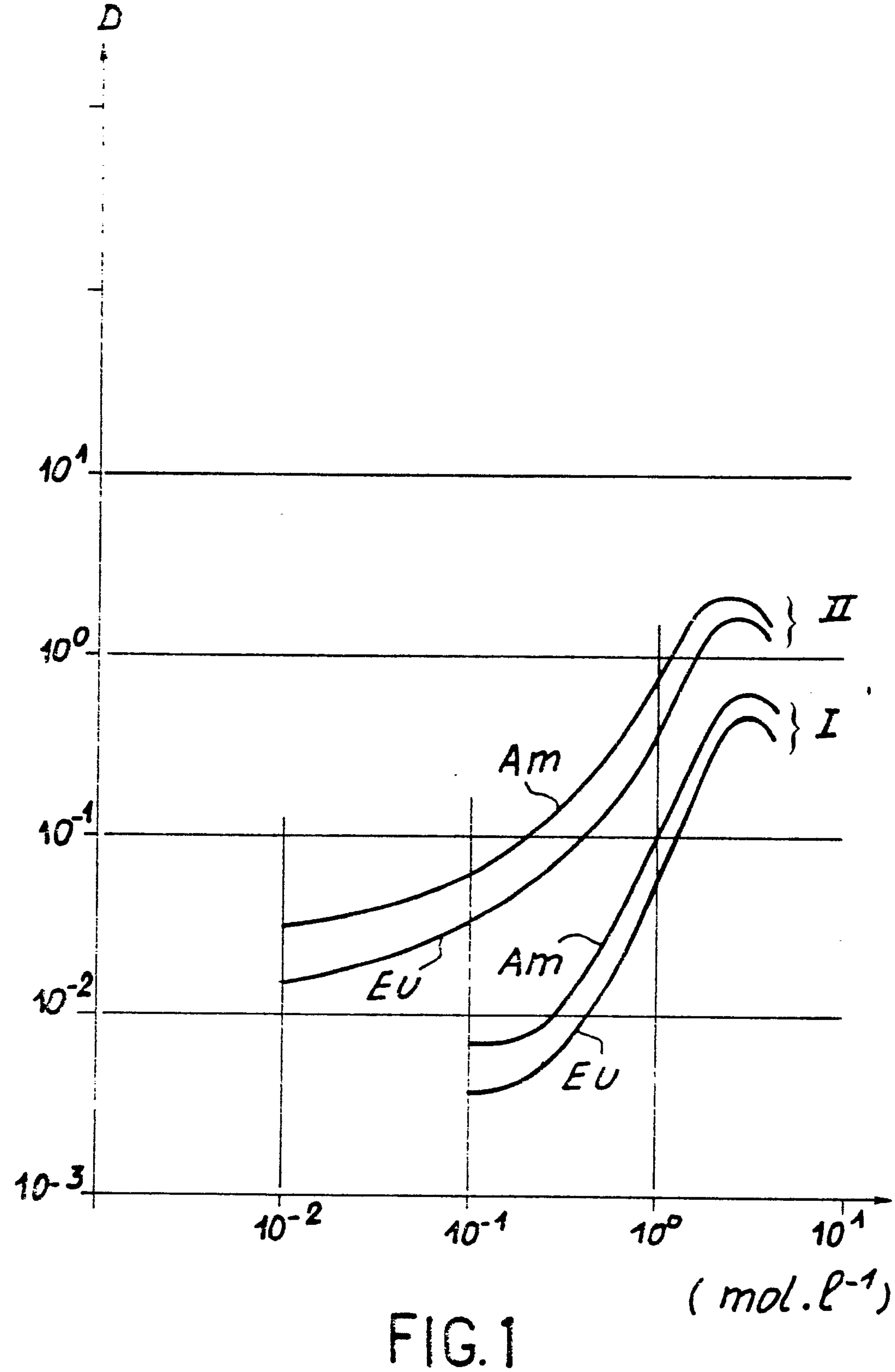


FIG.1

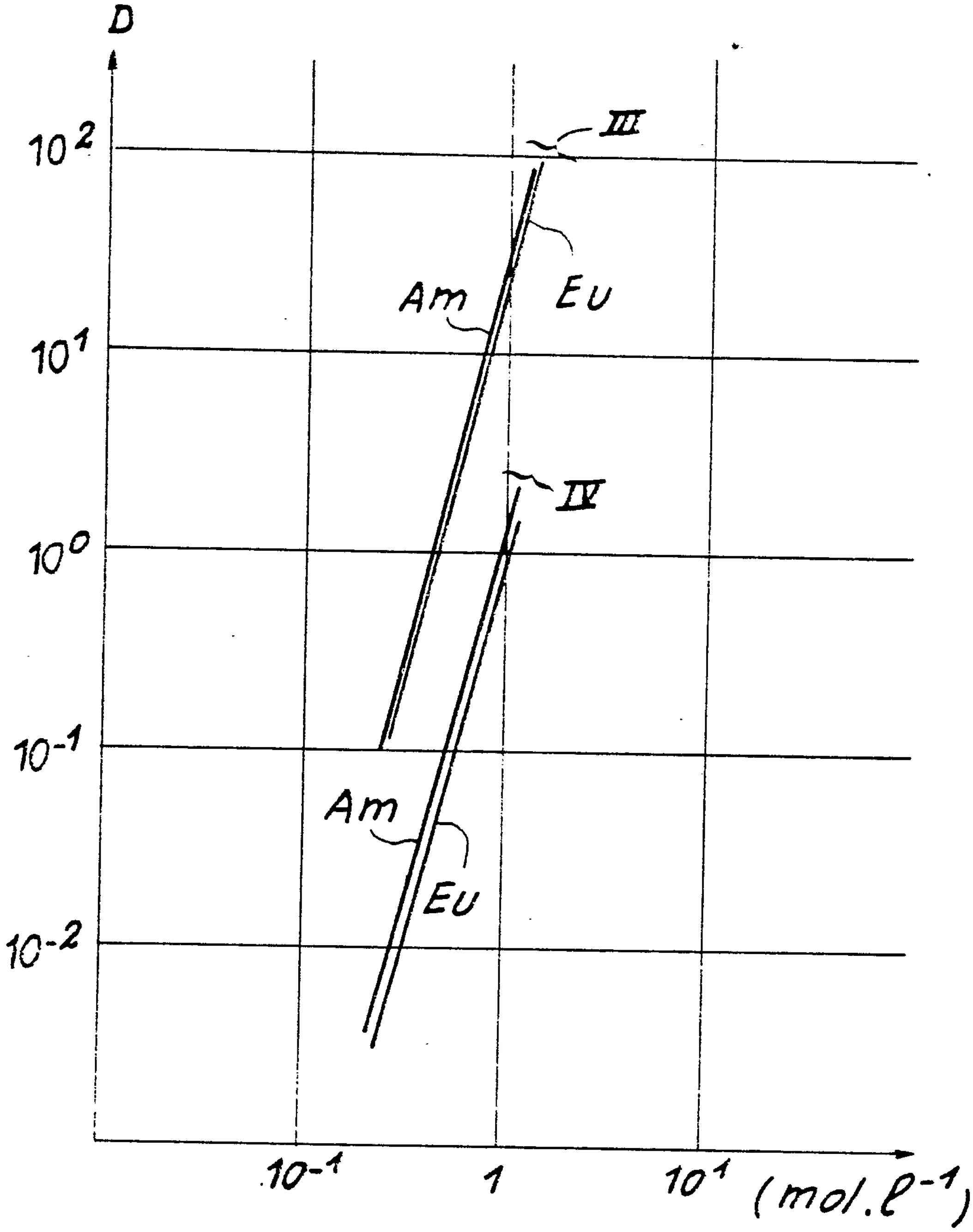


FIG.2

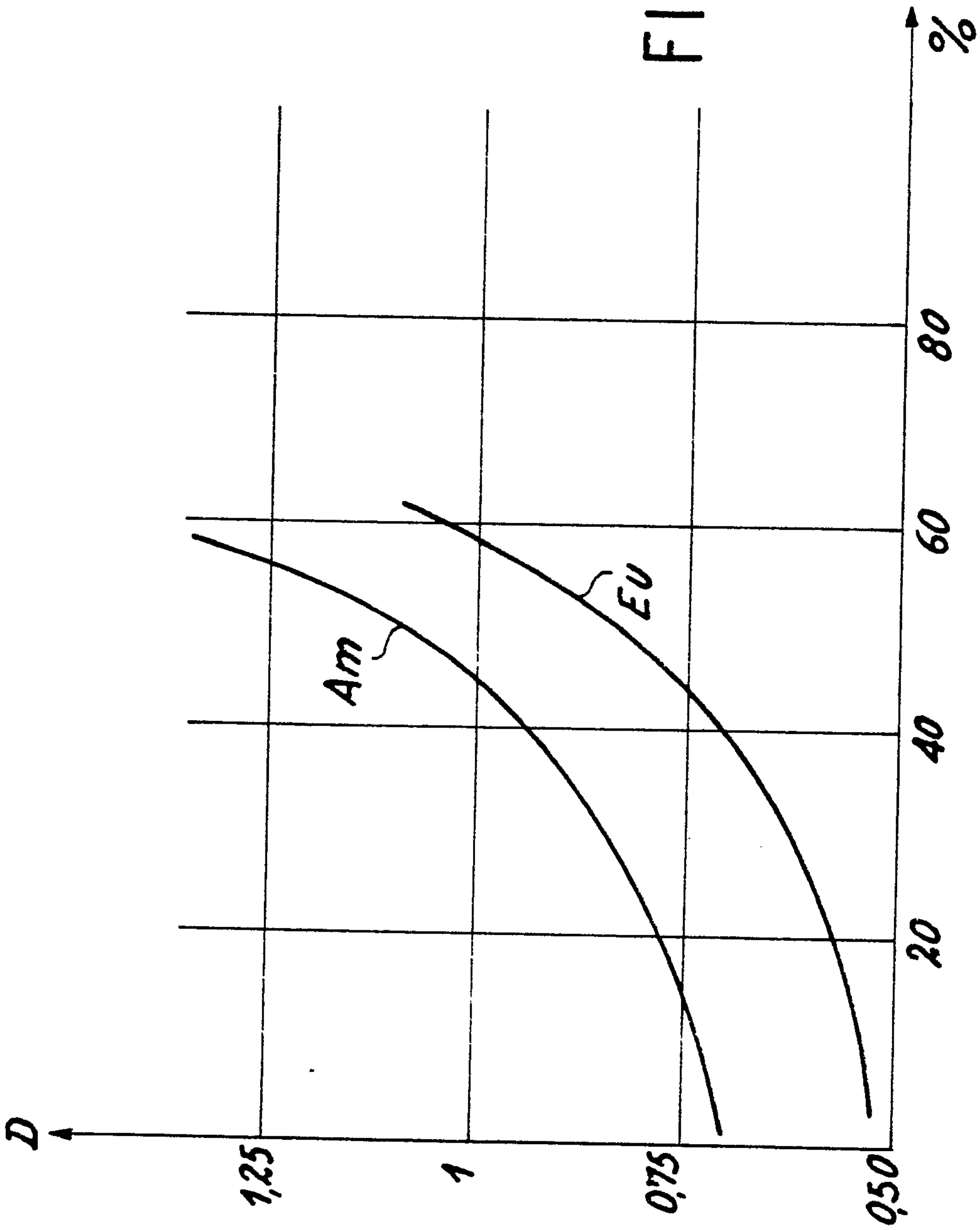


FIG. 3